# EUROPÄISCHE PATENTANMELDUNG

(11) **EP 3 725 662 A1**
(43) Veröffentlichungstag der Anmeldung: **21.10.2020**
(21) Anmeldenummer: 20166904.1
(22) Anmeldetag: 30.03.2020
(51) Int. Cl.: B63B 1/28

(54) **WASSERFAHRZEUG MIT EINER STEUERVORRICHTUNG**

(30) Priorität: 01.04.2019 DE 102019010848
(71) Anmelder: Gradolph, Christian, 76865 Rohrbach (DE)
(72) Erfinder: Gradolph, Christian, 76865 Rohrbach (DE)

(57) **Zusammenfassung**

Die Erfindung betrifft ein Wasserfahrzeug (10) zur Beförderung wenigstens einer Person auf oder über einer Wasseroberfläche, aufweisend ein Schwimmkörperelement (12) zur Bewirkung einer statischen Auftriebskraft, mit einem Aufnahmebereich für die Person, eine erste Tragflächenvorrichtung (14), die eine erste Auftriebskraft durch Umströmung mit Wasser erzeugt, eine zweite Tragflächenvorrichtung (18), die entlang einer Längsachse beabstandet zu der ersten Tragflächenvorrichtung angeordnet ist und die eine zweite Auftriebskraft durch Umströmung mit Wasser erzeugt, wobei die erste Auftriebskraft eine erste Hubhöhe des Wasserfahrzeugs über der Wasseroberfläche bewirken kann, eine Verstellvorrichtung (20), die an der ersten Tragflächenvorrichtung angeordnet ist und eingerichtet ist, die erste Hubhöhe abhängig von einer Stellgrösse zu verändern, wobei das Wasserfahrzeug in Bezug auf eine horizontale Ausrichtung einen Neigungswinkel einnehmen kann, eine Steuervorrichtung zur Ausgabe der Stellgrösse an die Verstellvorrichtung angeordnet und eingerichtet ist, den Neigungswinkel zu erfassen und die Stellgrösse bei zumindest einer Geschwindigkeit kleiner als die zweite Abhebegeschwindigkeit abhängig von dem Neigungswinkel und bei zumindest einer Geschwindigkeit größer gleich der zweiten Abhebegeschwindigkeit unabhängig von dem Neigungswinkel auszugeben.

## Beschreibung

Die Erfindung betrifft ein Wasserfahrzeug gemäß dem Oberbegriff von Anspruch 1.

Ein Wasserfahrzeug ist beispielsweise aus US 2010/0050916 A1 bekannt. Darin wird ein Wasserfahrzeug mit einer vorderen Tragfläche und einer hinteren Tragfläche beschrieben. Die vordere Tragfläche umfasst eine Höhensteuerungsvorrichtung, bei der ein Oberflächentaster die Wasseroberfläche abtastet und abhängig von einer Position zu der Wasseroberfläche den Anstellwinkel der vorderen Tragfläche verändert. Dadurch wird die Auftriebskraft der vorderen Tragfläche beeinflusst und ein übermäßiges Abheben des Wasserfahrzeugs bei zunehmender Geschwindigkeit begrenzt.

Diese Höhensteuerungsvorrichtung hat dabei den Nachteil, dass beim Startvorgang des Wasserfahrzeugs, bei dem ein Abhebezustand des Wasserfahrzeugs noch nicht vollständig erreicht ist, der Rumpf also noch zumindest teilweise unterhalb der Wasseroberfläche liegt, der Oberflächentaster einen grossen Anstellwinkel an der vorderen Tragfläche zur Erhöhung der Auftriebskraft einstellt. Dadurch wird der Strömungswiderstand der vorderen Tragfläche erhöht und der Energieverbrauch beim Startvorgang steigt. Weiterhin kann bei einem Wasserfahrzeug, bei dem das Körpergewicht der Person das Eigengewicht des Wasserfahrzeugs überschreitet, durch die während des Startvorgangs von der Person auf dem Wasserfahrzeug eingenommene Position einen grossen Einfluss auf die Parameter der Höhensteuerung haben.

Die Aufgabe der vorliegenden Erfindung besteht darin, das Wasserfahrzeug energiesparender und sicherer zu betreiben. Der Startvorgang soll energiesparender und sicherer durchgeführt werden können.

Wenigstens eine dieser Aufgaben wird durch ein Wasserfahrzeug mit den Merkmalen nach Anspruch 1 gelöst. Dadurch kann ein übermäßiger Neigungswinkel des Wasserfahrzeugs beim Startvorgang, insbesondere bei zumindest einer Geschwindigkeit kleiner als die zweite Abhebegeschwindigkeit verhindert werden. Das Wasserfahrzeug kann einen Abhebezustand über der Wasseroberfläche energiesparender einnehmen. Weiterhin kann eine zusätzliche Verstellvorrichtung an der zweiten Tragflächenvorrichtung entfallen. Der Startvorgang des Wasserfahrzeugs kann auch bei Veränderungen der Lage und des Betrags des Körperschwerpunkts der Person sicher, zuverlässig und energiesparend erfolgen. Nach dem Startvorgang im Abhebezustand bei zumindest einer Geschwindigkeit größer gleich der zweiten Abhebegeschwindigkeit kann sich der Neigungswinkel durch die Anordnung der Verstellvorrichtung an der ersten Tragflächenvorrichtung selbsteinstellend verändern. Eine Berücksichtigung des Neigungswinkels bei der Einstellung der ersten Hubhöhe kann entbehrlich sein. Durch die Berücksichtigung des Neigungswinkels bei der Ausgabe des Stellsignals beim Startvorgang, also noch vor einem Abhebezustand, kann die zweite Abhebegeschwindigkeit und der Strömungswiderstand, insbesondere abhängig von dem Körpergewicht der Person, beeinflusst werden.

Die erste Auftriebskraft kann bei Geschwindigkeiten größer gleich einer ersten Abhebegeschwindigkeit eine erste Hubhöhe des Wasserfahrzeugs über der Wasseroberfläche bewirken. Die zweite Auftriebskraft kann bei Geschwindigkeiten größer gleich einer zweiten Abhebegeschwindigkeit eine gegenüber der ersten Hubhöhe entlang der Längsachse beabstandete zweite Hubhöhe des Wasserfahrzeugs über der Wasseroberfläche bewirken. Der Neigungswinkel kann durch die erste und zweite Hubhöhe festgelegt sein.

Die Stellgrösse kann bei zumindest einer Geschwindigkeit kleiner als die zweite Abhebegeschwindigkeit abhängig von dem Neigungswinkel sein. Die Steuervorrichtung kann eingerichtet sein, die Stellgrösse bei allen Geschwindigkeiten kleiner als die zweite Abhebegeschwindigkeit abhängig von dem Neigungswinkel auszugeben. Die Stellgrösse kann bei zumindest einer Geschwindigkeit größer gleich der zweiten Abhebegeschwindigkeit unabhängig von dem Neigungswinkel sein. Die Steuervorrichtung kann eingerichtet sein, die Stellgrösse bei zumindest einer Geschwindigkeit größer gleich der zweiten Abhebegeschwindigkeit unabhängig von dem Neigungswinkel auszugeben. Die Steuervorrichtung kann eingerichtet sein, die Stellgrösse bei allen Geschwindigkeiten größer als die zweite Abhebegeschwindigkeit unabhängig von dem Neigungswinkel auszugeben.

Die erste Abhebegeschwindigkeit kann größer als die zweite Abhebegeschwindigkeit sein.

Wenn nicht anders angegeben, bezieht sich die Geschwindigkeit auf eine Bewegung parallel zu der Längsachse. Das Wasserfahrzeug weist eine Längsachse, eine Querachse und eine Hochachse auf. Die räumliche Angabe vorne und hinten bezieht sich dabei auf eine Position in Bezug auf die Längsachse, links und rechts auf eine Position in Bezug auf die Querachse und oben und unten auf eine Position in Bezug auf die Hochachse. Der Neigungswinkel beschreibt einen Winkel in der durch die Längsachse und die Hochachse aufgespannten Ebene, der Kippwinkel einen Winkel in der durch die Querachse und die Hochachse aufgespannten Ebene und der Drehwinkel einen Winkel in der durch die Längsachse und die Querachse aufgespannten Ebene.

Die erste und zweite Hubhöhe ist jeweils der Höhenversatz des Wasserfahrzeugs entlang der Hochachse ausgehend von der Referenzhöhe des Wasserfahrzeugs auf der Wasseroberfläche bei einer Geschwindigkeit von Null. Die erste Hubhöhe kann eine Höhe des Frontbereichs des Wasserfahrzeugs über der Wasseroberfläche sein. Die zweite Hubhöhe kann eine Höhe des Heckbereichs des Wasserfahrzeugs über der Wasseroberfläche sein.

Das Wasserfahrzeug kann zusammen mit dem Körpergewicht der wenigstens einen Person eine Gesamtgewichtskraft aufweisen, die an einem gedachten Gesamtschwerpunkt angreift. Das Körpergewicht der Person kann größer als das Eigengewicht des Wasserfahrzeugs sein.

Die erste Abhebegeschwindigkeit ist die Geschwindigkeit des Wasserfahrzeugs, ab der die durch die erste Tragflächenvorrichtung bewirkte erste Auftriebskraft grösser gleich dem auf die erste Tragflächenvorrichtung einwirkenden Anteil der Gesamtgewichtskraft ist. Die zweite Abhebegeschwindigkeit ist die Geschwindigkeit des Wasserfahrzeugs, ab der die durch die zweite Tragflächenvorrichtung bewirkte zweite Auftriebskraft grösser gleich dem auf die zweite Tragflächenvorrichtung einwirkenden Anteil, insbesondere dem verbleibenden Anteil, der Gesamtgewichtskraft ist.

Das Wasserfahrzeug kann bei zunehmenden Geschwindigkeiten oberhalb der ersten und zweiten Abhebegeschwindigkeit eine Drehbewegung um eine parallel zu der Querachse verlaufende Neigungsachse ausführen. Die Drehbewegung um die Neigungsachse kann von der ersten und zweiten Auftriebskraft abhängen. Die zweite Hubhöhe kann durch die Drehbewegung um die Neigungsachse begrenzt werden.

Das Schwimmkörperelement kann eine Standfläche für die Person aufweisen. Das Schwimmkörperelement kann als Surfboard, Waveboard, Bodyboard oder dergleichen ausgeführt sein.

Die erste Tragflächenvorrichtung kann in einer vorderen Hälfte des Wasserfahrzeugs angeordnet sein. Die zweite Tragflächenvorrichtung kann in einer hinteren Hälfte des Wasserfahrzeugs angeordnet sein. Die erste Tragflächenvorrichtung kann wenigstens eine erste Tragfläche aufweisen. Die erste und/oder zweite Tragflächenvorrichtung kann wenigstens eine zweite Tragfläche aufweisen. Die erste und/oder zweite Tragflächenvorrichtung kann einen Doppelflügel und/oder einen Boxwing und/oder eine ringförmige Tragfläche und/oder eine geschlossene Tragfläche (closed wing) aufweisen. Die erste und/oder zweite Tragflächenvorrichtung kann eine zweite und dritte Tragfläche aufweisen. Insbesondere können noch weitere Tragflächen angeordnet sein. Die zweite und dritte Tragfläche können in Bezug auf die Hochachse übereinander angeordnet sein. Die zweite und dritte Tragfläche können in Bezug auf die Querachse an wenigstens einer Seite, insbesondere an beiden Seiten, miteinander verbunden sein. Die zweite und dritte Tragfläche können in Bezug auf die Längsachse bündig zueinander ausgerichtet oder versetzt zueinander sein. Die dritte Tragfläche kann in Bezug auf die Längsachse vor oder hinter der zweiten Tragfläche angeordnet sein. Die zweite Tragfläche kann in Bezug auf die Hochachse oberhalb von der dritten Tragfläche angeordnet sein. Die Auftriebskraft der zweiten Tragfläche kann gleich der Auftriebskraft der dritten Tragfläche sein. Die Auftriebskraft der zweiten Tragfläche kann kleiner oder größer als die Auftriebskraft der dritten Tragfläche sein. Die Spannweite der zweiten und dritten Tragfläche kann gleich oder unterschiedlich sein. Die Spannweite der ersten Tragfläche kann kleiner als die Spannweite der zweiten und/oder dritten Tragfläche sein. Die erste Tragfläche kann in Bezug auf die Hochachse versetzt zu der zweiten und/oder dritten Tragfläche, insbesondere zwischen der zweiten und dritten Tragfläche, angeordnet sein. Die erste, zweite und/oder dritte Tragfläche kann ein strömungsdynamisches Profil, insbesondere ein Tragflächenprofil, beispielsweise ein NACA-Profil, aufweisen. Die erste und zweite Auftriebskraft kann hauptsächlich durch die Umströmung der jeweiligen Tragfläche im und mit Wasser bewirkt werden. Die jeweilige Tragfläche ist bevorzugt als hydrofoil ausgebildet. Der Anstellwinkel der zweiten und dritten Tragfläche kann gleich oder unterschiedlich sein. Der Auftriebsbeiwert der zweiten und dritten Tragfläche kann gleich oder unterschiedlich sein. Die erste, zweite und/oder dritte Tragfläche kann jeweils an einem oder beiden Tragflächenenden Tragflächenverbindungselemente und/oder Tragflächenabschlusselemente, insbesondere winglets, end plates und/oder wing fences, insbesondere zur Verzögerung oder Vermeidung von ventilation und/oder zur Verringerung des, bevorzugt induzierten, Strömungswiderstands aufweisen. Die erste und/oder zweite Tragflächenvorrichtung kann lösbar mit dem Wasserfahrzeug verbunden sein.

Die erste, zweite und/oder dritte Tragfläche kann an einem, insbesondere in Bezug auf die Querachse in einem Zentralbereich des Wasserfahrzeugs liegenden, jeweiligen oder gemeinsamen Halteelement befestigt sein. Die zweite und dritte Tragfläche können gemeinsam an einem Halteelement festgelegt und über das Halteelement mit dem Wasserfahrzeug verbunden sein. Das jeweilige Haltelement kann als Mast, Strebe oder strut ausgebildet sein. Die erste, zweite und/oder dritte Tragfläche kann sich in Bezug auf die Querachse jeweils ausgehend von dem jeweiligen Haltelement in beide Richtungen erstrecken. Das jeweilige Haltelement kann parallel zu der Hochachse verlaufen. Das jeweilige Haltelement kann senkrecht zu der Querachse verlaufen. Das jeweilige Halteelement kann mit dem Schwimmkörperelement mittelbar oder unmittelbar verbunden sein. Das jeweilige Haltelement kann wenigstens eine Aussparung aufweisen, in der die elektrische Versorgung, beispielsweise wenigstens ein Kabel, eines Antriebselements durchgeführt ist.

Die erste, zweite und/oder dritte Tragfläche kann in einer durch die Querachse und die Hochachse aufgespannten Ebene in Bezug auf die Querachse gewinkelt sein. Die erste, zweite und/oder dritte Tragfläche kann bei Geschwindigkeiten größer gleich der ersten und/oder zweiten Abhebegeschwindigkeit wenigstens teilweise unterhalb der Wasseroberfläche wirksam sein. Die erste, zweite und/oder dritte Tragfläche kann bei einer Geschwindigkeit grösser gleich der ersten und/oder zweiten Abhebegeschwindigkeit die Wasseroberfläche durchdringen. Die jeweilige Tragfläche kann bei einer über der ersten und/oder zweiten Abhebegeschwindigkeit liegenden Geschwindigkeit einen unterhalb der Wasseroberfläche wirksamen und die jeweilige Auftriebskraft bewirkenden jeweiligen ersten Flächenanteil aufweisen und bei einer über der ersten und/oder zweiten Abhebegeschwindigkeit liegenden Geschwindigkeit einen unterhalb der Wasseroberfläche wirksamen und die jeweilige Auftriebskraft bewirkenden jeweiligen zweiten Flächenanteil aufweisen, wobei der erste Flächenanteil grösser als der zweite Flächenanteil ist. Ein Anstieg der jeweiligen Auftriebskraft mit zunehmender Geschwindigkeit über der ersten und/oder zweiten Abhebegeschwindigkeit kann begrenzt werden, indem der unterhalb der Wasseroberfläche wirksame und die jeweilige Auftriebskraft bewirkende Flächenanteil der jeweiligen Tragfläche umgekehrt proportional zu der Geschwindigkeit ist.

Bei Geschwindigkeiten gleich der oder über der ersten Abhebegeschwindigkeit ist die erste Hubhöhe größer gleich Null. Bei Geschwindigkeiten gleich der oder über der zweiten Abhebegeschwindigkeit ist die zweite Hubhöhe größer gleich Null. Das Schwimmkörperelement kann bei Geschwindigkeiten grösser als die erste und zweite Abhebegeschwindigkeit eine durch die erste und zweite Hubhöhe gekennzeichnete Flughöhe über der Wasseroberfläche einnehmen. Bei der ersten Abhebegeschwindigkeit kann die erste Hubhöhe größer gleich Null und die zweite Hubhöhe gleich Null sein.

Die Person weist einen Körperschwerpunkt auf. Der Körperschwerpunkt der wenigstens einen Person kann durch Verlagerung eine veränderliche Position entlang der Längsachse einnehmen. Der Körperschwerpunkt der wenigstens einen Person kann in Bezug auf die Längsachse zwischen der ersten und zweiten Tragflächenvorrichtung liegen, bevorzugt zwischen der ersten und zweiten Tragfläche. Der Körperschwerpunkt kann der Schwerpunkt wenigstens einer aufrecht oder nahezu aufrecht stehenden Person sein. Auch kann der Körperschwerpunkt der Gesamtkörperschwerpunkt von wenigstens zwei Personen sein, von denen wenigstens eine aufrecht oder nahezu aufrecht steht. Der Körperschwerpunkt und die erste Tragfläche können entlang der Längsachse über einen ersten Abstand und der Körperschwerpunkt und die zweite Tragfläche können entlang der Längsachse über einen zweiten Abstand voneinander beabstandet sein. Die erste Tragfläche und die zweite Tragfläche können entlang der Längsachse über einen dritten Abstand voneinander beabstandet sein. Der erste Abstand und der zweite Abstand kann jeweils kleiner als der dritte Abstand sein. Der erste Abstand kann größer als der zweite Abstand sein. Dadurch kann die Handlichkeit des Wasserfahrzeugs verbessert werden. Die zweite Hubhöhe kann abhängig von einer Verlagerung des Körperschwerpunkts entlang der Längsachse sein.

Die zweite Auftriebskraft kann grösser als die erste Auftriebskraft sein. Die erste und zweite Auftriebskraft bilden zusammen eine Gesamtauftriebskraft. Die zweite Auftriebskraft ist grösser gleich 50%, 60%, 70%, 80% oder 90% der Gesamtauftriebskraft. Die zweite Auftriebskraft ist grösser gleich 50%, 60%, 70%, 80% oder 90% der Gesamtgewichtskraft bei Geschwindigkeiten grösser gleich der zweiten Abhebegeschwindigkeit. Die erste Auftriebskraft ist kleiner gleich 50%, 40%, 30%, 20% oder 10% der Gesamtgewichtskraft bei Geschwindigkeiten grösser gleich der zweiten Abhebegeschwindigkeit.

Zwischen der Gesamtgewichtskraft und der ersten Auftriebskraft kann in Bezug auf die Längsachse ein erster Abstand vorliegen. Zwischen der Gesamtgewichtskraft und der zweiten Auftriebskraft kann in Bezug auf die Längsachse ein zweiter Abstand vorliegen. Der erste Abstand kann größer als der zweite Abstand sein. Der auf die erste Tragflächenvorrichtung einwirkende Anteil der Gesamtgewichtskraft kann kleiner als 50%, 40%, 30% oder 20% sein. Der auf die zweite Tragflächenvorrichtung einwirkende Anteil der Gesamtgewichtskraft kann größer gleich 20%, 30%, 40% oder 50% sein. Der Gesamtschwerpunkt kann in Bezug auf die Längsachse zu der ersten Auftriebskraft einen ersten Abstand aufweisen und zu der zweiten Auftriebskraft einen zweiten Abstand aufweisen, wobei der erste Abstand größer als der zweite Abstand ist. Der zweite Abstand kann kleiner gleich 90%, 75%, 50%, 40%, 30% oder 20% des ersten Abstands sein.

Die erste, zweite und/oder dritte Tragfläche kann jeweils einteilig oder mehrteilig aufgebaut sein. Die erste, zweite und/oder dritte Tragfläche kann über zumindest 50% der jeweiligen Spannweite einen konstanten Querschnitt aufweisen. Der konstante Querschnitt kann entlang zumindest 60%, 70%, 80% oder 90% der Spannweite der ersten, zweiten und/oder dritten Tragfläche vorliegen. Dadurch kann eine kostengünstige und einfache Herstellung der jeweiligen Tragfläche ermöglicht werden. Beispielsweise können die erste, zweite und/oder dritte Tragfläche zumindest teilweise extrudiert werden, beispielsweise stranggepresst werden.

Die erste, zweite und/oder dritte Tragfläche kann in Bezug auf die Querachse wenigstens abschnittsweise nach vorne oder nach hinten gewinkelt, insbesondere in einem Winkel kleiner gleich 45°, 30°, 25°, 20° oder 15° gegenüber der Querachse, angeordnet sein. Die erste, zweite und/oder dritte Tragfläche kann senkrecht zu der Hochachse angeordnet sein. Auch kann die erste, zweite und/oder dritte Tragfläche in Bezug auf die Hochachse wenigstens abschnittsweise nach oben oder unten gewinkelt, insbesondere in einem Winkel grösser gleich 85°, 82°, 80°, 75°, 70°, 60° oder 55° angeordnet sein.

Die erste Tragfläche kann bei einer über der ersten Abhebegeschwindigkeit liegenden ersten Geschwindigkeit einen ersten Anstellwinkel aufweisen und bei einer über der ersten Abhebegeschwindigkeit und der ersten Geschwindigkeit liegenden zweiten Geschwindigkeit einen zweiten Anstellwinkel aufweisen, wobei der erste Anstellwinkel grösser als der zweite Anstellwinkel ist. Ein Anstieg der ersten Auftriebskraft mit zunehmender Geschwindigkeit über der ersten Abhebegeschwindigkeit kann über die Stellgrösse begrenzt werden. Die erste, zweite und/oder dritte Tragfläche kann einen jeweiligen Anstellwinkel zwischen -15° und 15° aufweisen. Der Anstellwinkel der zweiten und/oder dritten Tragfläche kann während des Betriebs unveränderlich oder veränderlich sein.

Das Wasserfahrzeug kann eine Lenkvorrichtung aufweisen. Die Lenkvorrichtung kann die erste und/oder zweite Tragflächenvorrichtung aufweisen, die jeweils um eine Lenkachse drehbar ist und eine Drehbewegung ausführen kann. Diese Drehbewegung kann abhängig von einer Drehbewegung eines durch die Person bedienbaren Lenkelements, insbesondere umfassend eine Griffstange, sein. Die Lenkvorrichtung kann abhängig von der Drehbewegung eine Richtungsänderung des Wasserfahrzeugs, insbesondere eine Drehung des Wasserfahrzeugs um die Hochachse, bewirken. Die Lenkachse kann gegenüber der Hochachse geneigt sein, beispielsweise um wenigstens 5°, 10°, 12°, 15°, 17°, 20°, 22°, 25° oder 30°.

Das Wasserfahrzeug kann ein Antriebselement zur Bewirkung einer Vorschubkraft auf das Wasserfahrzeug aufweisen. Das Antriebselement kann der ersten und/oder zweiten Tragflächenvorrichtung zugeordnet sein. Das Antriebselement kann in Bezug auf die Längsachse vor oder hinter dem Körperschwerpunkt angeordnet sein. Das Antriebselement kann elektrisch betrieben sein. Das Antriebselement kann entlang der Hochachse auf Höhe, oberhalb oder unterhalb der zweiten Tragfläche angeordnet sein. Das Antriebselement kann zwischen der zweiten und dritten Tragfläche angeordnet sein. Das Antriebselement kann ein Vorschubelement aufweisen. Das Vorschubelement kann eine Turbine, ein Propeller und/oder ein Jetantrieb sein. Das Vorschubelement kann von einem Schutzgehäuse umgeben sein, insbesondere um einen Schutz vor einer versehentlichen Berührung des Vorschubelements, insbesondere während laufendem Vorschubelement, zu ermöglichen. Das Schutzgehäuse kann an dem Halteelement befestigt sein. Das Schutzgehäuse kann zumindest teilweise zwischen der zweiten und dritten Tragfläche angeordnet sein. Das Antriebselement kann einen Elektromotor umfassen, der das Vorschubelement mittelbar, beispielsweise über ein Getriebe oder unmittelbar antreibt. Der Elektromotor kann vor dem Vorschubelement angeordnet sein oder das Vorschubelement umfangsseitig umgeben. Der Elektromotor kann in dem Vorschubelement integriert sein. Das Antriebselement kann über ein Batterieelement mit elektrischer Energie versorgt werden. Das Batterieelement kann in dem Schwimmkörperelement angeordnet sein.

Die Steuervorrichtung kann eingerichtet sein, bei Geschwindigkeiten größer gleich der zweiten Abhebegeschwindigkeit die Stellgrösse größer gleich einem Minimalwert festzulegen, wobei der Minimalwert einer ersten Hubhöhe entspricht, deren Betrag grösser gleich einer, insbesondere mittleren oder maximalen, Profiltiefe der ersten Tragfläche ist. Dadurch kann der Strömungswiderstand der ersten Tragfläche verringert werden.

Die zweite Hubhöhe kann bei einer Geschwindigkeit größer als der zweiten Abhebegeschwindigkeit durch Verlagerung des Körperschwerpunkts der Person entlang der Längsachse veränderbar sein.

In einer bevorzugten Ausführung der Erfindung weist das Wasserfahrzeug bei der zweiten Abhebegeschwindigkeit einen ersten Neigungswinkel und bei einer Geschwindigkeit oberhalb der zweiten Abhebegeschwindigkeit einen gegenüber dem ersten Neigungswinkel kleineren zweiten Neigungswinkel auf. Durch den gegenüber dem ersten Neigungswinkel kleineren zweiten Neigungswinkel bei höheren Geschwindigkeiten kann die mit zunehmender Geschwindigkeit ansteigende zweite Auftriebskraft durch Abnahme des Neigungswinkels begrenzt werden.

Das Wasserfahrzeug kann bei einer über der Geschwindigkeit, die dem zweiten Neigungswinkel zugeordnet ist, liegenden Geschwindigkeit gegenüber der Horizontalen einen dritten Neigungswinkel aufweisen. Der dritte Neigungswinkel kann kleiner als der erste Neigungswinkel sein. Der Anstellwinkel der zweiten und/oder dritten Tragfläche kann proportional zu dem Neigungswinkel sein. Je grösser der Neigungswinkel ist, desto grösser kann der Anstellwinkel der zweiten Tragfläche sein. Die Neigungsachse der bei Übergang von dem zweiten zu dem dritten Neigungswinkel ausgeführten Drehbewegung kann im oder über dem Bereich der ersten Tragflächenvorrichtung liegen. Die Neigungsachse kann parallel zu der Querachse verlaufen.

In einer speziellen Ausführung der Erfindung ist die Steuervorrichtung eingerichtet, die Stellgrösse abhängig von einer erfassten ersten Hubhöhe und dem erfassten Neigungswinkel festzulegen. Durch die zusätzliche Einbeziehung der ersten Hubhöhe kann der Startvorgang des Wasserfahrzeug noch effizienter erfolgen, beispielsweise indem der Frontbereich des Wasserfahrzeugs zumindest teilweise oberhalb der Wasseroberfläche angehoben wird und dadurch die Umströmung des Wasserfahrzeugs verbessert wird.

In einer weiteren speziellen Ausführung der Erfindung weist die Verstellvorrichtung ein Verstellelement zur Veränderung der ersten Auftriebskraft und ein Aktorelement zur Betätigung des Verstellelements abhängig von der Stellgrösse auf. Das Verstellelement kann wenigstens eine schwenkbare Tragflächenklappe (flap) zur Änderung des Auftriebsbeiwerts der ersten Tragfläche umfassen. Das Verstellelement kann eine Anstellwinkeländerung und/oder Strömungsbeeinflussung der ersten Tragfläche bewirken. Die erste Tragfläche kann um eine Querachse drehbar sein und dabei das Verstellelement bilden. Das Aktorelement kann einen Stellmotor oder Schrittmotor umfassen. Das Aktorelement kann einen hydraulischen oder pneumatischen Steuerdruck bewirken.

Die Verstellvorrichtung kann eine Übertragungsvorrichtung zur Übertragung einer von dem Aktorelement ausgegebenen Aktorbewegung zu dem Verstellelement zur Bewirkung einer die Auftriebskraft beeinflussenden Verstellbewegung umfassen. Die Aktorbewegung kann von der Stellgrösse abhängen und eine Drehbewegung und/oder translatorische Bewegung sein. Die Verstellbewegung kann eine Drehbewegung und/oder eine translatorische Bewegung sein. Die Übertragungsvorrichtung kann ein erstes und/oder zweites Übertragungselement aufweisen. Das zweite Übertragungselement kann mit dem ersten Übertragungselement drehfest und lösbar verbindbar sein. Das erste Übertragungselement kann, insbesondere ausschließlich, in dem Schwimmkörperelement angeordnet sein. Das zweite Übertragungselement kann, insbesondere ausschließlich, außerhalb von dem Schwimmkörperelement, bevorzugt in der ersten Tragflächenvorrichtung, angeordnet sein. Das erste und zweite Übertragungselement können die Aktorbewegung und/oder Verstellbewegung übertragen.

Die Verstellvorrichtung kann lösbar mit dem Wasserfahrzeug verbunden sein. Das Aktorelement kann in dem Schwimmkörperelement angeordnet und/oder der ersten Tragflächenvorrichtung zugeordnet sein. Das Aktorelement kann in der ersten Tragflächenvorrichtung angeordnet sein. Das Aktorelement kann im Betrieb des Wasserfahrzeugs oberhalb oder unterhalb der Wasseroberfläche angeordnet sein.

Es kann eine weitere Verstellvorrichtung angeordnet sein, insbesondere zur Veränderung eines Kippwinkels. Die weitere Verstellvorrichtung kann von dem Benutzer und/oder automatisch gesteuert werden.

In einer vorteilhaften Ausführung der Erfindung umfasst die Steuervorrichtung ein Bedienelement, das manuell durch die Person des Wasserfahrzeugs, insbesondere während der Fahrt, bedienbar ist und abhängig von der Bedienung durch die Person eine veränderbare Stellposition aufweisen kann, wobei die Stellgrösse abhängig von der Stellposition ist. Das Bedienelement kann ein Schalter, insbesondere ein Drehschalter, ein Griff, ein Hebel, ein Pedal oder eine softwarebasierte Funktion, beispielsweise auf einem Touchscreen oder dergleichen sein. Das Bedienelement kann an dem Lenkelement, insbesondere an der Griffstange, angebracht sein. Das Bedienelement kann derart ausgeführt sein, dass die Veränderung der Stellposition durch eine Bewegung relativ zu der Griffstange erfolgen kann. Durch das Bedienelement kann die Person eine gewünschte erste Hubhöhe einstellen.

In einer bevorzugten Ausführung der Erfindung ist die Stellgrösse bei Geschwindigkeiten kleiner als der zweiten Abhebegeschwindigkeit unabhängig von der Stellposition. Dadurch kann der Neigungswinkel bei Geschwindigkeiten kleiner als der zweiten Abhebegeschwindigkeit unabhängig von der Stellposition eingestellt und/oder begrenzt werden.

In einer speziellen Ausführung der Erfindung umfasst die Steuervorrichtung eine Regeleinheit, die die Stellgrösse abhängig von einem Messwert und einem Sollwert an die Verstellvorrichtung ausgibt. Die Steuervorrichtung kann einen Stabilisierungsbetrieb einnehmen, bei dem die Steuervorrichtung die Stellgrösse abhängig von dem Sollwert unter Einhaltung einer möglichst konstanten ersten Hubhöhe an die Verstellvorrichtung ausgibt. Der Sollwert kann der Regeleinheit automatisch vorgegeben werden. Dabei liegt ein automatischer Stabilisierungsbetrieb vor. Der Sollwert kann der Regeleinheit alternativ oder zusätzlich manuell vorgegeben werden. Dabei kann ein manueller oder halbautomatischer Stabilisierungsbetrieb vorliegen.

Die Stellgrösse kann unabhängig von einem Messwert an die Verstellvorrichtung ausgegeben werden. Es kann eine Umschaltung zwischen dem automatischen, halbautomatischen und/oder dem manuellen Stabilisierungsbetrieb erfolgen. Die Umschaltung kann im Betrieb mit dem Wasserfahrzeug, insbesondere durch die Person, erfolgen.

Das Wasserfahrzeug kann eine Höhenerfassungseinheit zur Erfassung der ersten Hubhöhe und/oder der zweiten Hubhöhe und/oder eine Geschwindigkeitserfassungseinheit zur Erfassung einer Geschwindigkeit des Wasserfahrzeugs und/oder eine Beschleunigungserfassungseinheit zur Erfassung einer Beschleunigung des Wasserfahrzeugs aufweisen. Die Stellgrösse kann abhängig von der erfassten ersten und/oder zweiten Hubhöhe, der erfassten Geschwindigkeit und/oder der erfassten Beschleunigung sein. Der Messwert kann die erfasste erste und/oder zweite Hubhöhe, die erfasste Geschwindigkeit, den erfassten Neigungswinkel und/oder die erfasste Beschleunigung kennzeichnen.

Die Höhenerfassungseinheit kann wenigstens einen Abstandssensor umfassen. Der Abstandssensor kann die jeweilige Hubhöhe optisch, kapazitiv, induktiv, elektrisch, elektromagnetisch und/oder akustisch erfassen. Der Abstandssensor kann ein Ultraschallsensor, ein Radar oder ein Lidar sein. Der Abstandssensor kann an einer Unterseite des Wasserfahrzeugs angeordnet oder eingebaut sein, vorzugsweise bündig mit der Außenfläche der Unterseite des Wasserfahrzeugs. Der Abstandssensor kann in einem Frontbereich, in einem mittleren Bereich oder in einem Heckbereich des Wasserfahrzeugs angeordnet sein. Es kann ein weiterer Abstandssensor angeordnet sein. Der weitere Abstandssensor kann in einem von dem Abstandssensor unterschiedlichen Bereich aus Frontbereich, mittlerer Bereich oder Heckbereich angeordnet sein.

In einer weiteren bevorzugten Ausführung der Erfindung ist das Bedienelement an einer Lenkstange einer Lenkvorrichtung angeordnet.

In einer speziellen Ausführung der Erfindung ist die Stellgrösse ein elektrisches und/oder optisches Signal. Die Stellgrösse kann drahtlos oder kabelgebunden an das Aktorelement ausgegeben werden.

Weitere Vorteile und vorteilhafte Ausgestaltungen der Erfindung ergeben sich aus der Figurenbeschreibung und den Abbildungen.

### Figurenbeschreibung

Die Erfindung wird im Folgenden unter Bezugnahme auf die Abbildungen ausführlich beschrieben. Es zeigen im Einzelnen:
- Figur 1:: Eine räumliche Ansicht eines Wasserfahrzeugs in einer speziellen Ausführungsform der Erfindung.
- Figur 2:: Eine Seitenansicht eines Wasserfahrzeugs in einer weiteren speziellen Ausführungsform der Erfindung.
- Figur 3:: Eine Seitenansicht eines Wasserfahrzeugs in einer weiteren speziellen Ausführungsform der Erfindung.
- Figur 4:: Eine Seitenansicht eines Wasserfahrzeugs in einer weiteren speziellen Ausführungsform der Erfindung.
- Figur 5a:: Eine Seitenansicht eines Wasserfahrzeugs in einer weiteren speziellen Ausführungsform der Erfindung in einem ersten Betriebszustand.
- Figur 5b:: Eine Seitenansicht eines Wasserfahrzeugs in einer weiteren speziellen Ausführungsform der Erfindung in einem zweiten Betriebszustand.

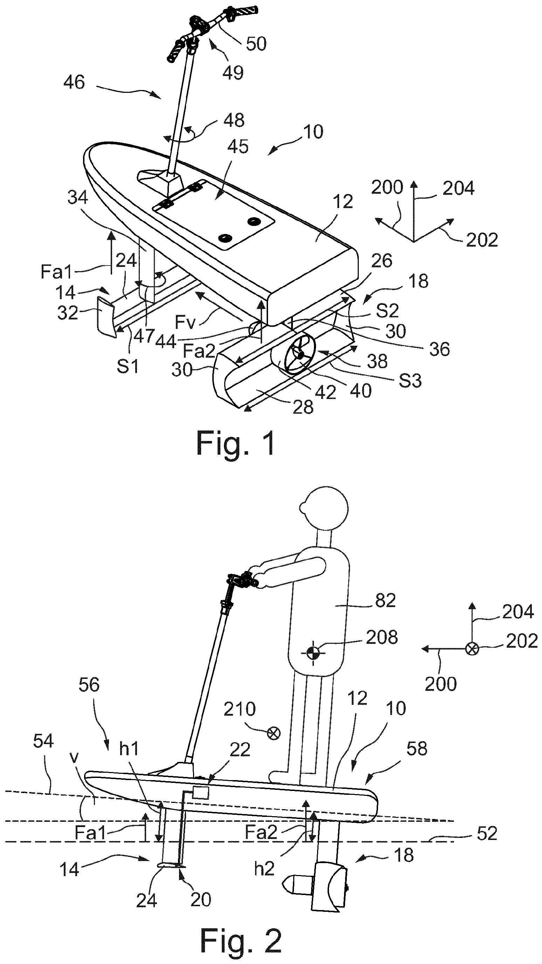

Figur 1 zeigt eine räumliche Ansicht eines Wasserfahrzeugs 10 in einer speziellen Ausführungsform der Erfindung. Das Wasserfahrzeug 10 kann zur Beförderung wenigstens einer Person auf oder über einer Wasseroberfläche dienen. Das Körpergewicht der Person kann größer als das Eigengewicht des Wasserfahrzeugs sein. Das Wasserfahrzeug 10 umfasst ein Schwimmkörperelement 12 zur Bewirkung einer statischen Auftriebskraft. Das Schwimmkörperelement 12 kann einen Aufnahmebereich, insbesondere eine Standfläche, für die Person aufweisen. Das Schwimmkörperelement 12 ist bevorzugt als Surfboard, Waveboard oder Bodyboard ausgeführt. Das Wasserfahrzeug 10 umfasst eine erste Tragflächenvorrichtung 14, die eine erste Auftriebskraft Fa1 durch Umströmung mit Wasser erzeugt und eine zweite Tragflächenvorrichtung 18, die entlang einer Längsachse 200 beabstandet zu der ersten Tragflächenvorrichtung 14 angeordnet ist und die eine zweite Auftriebskraft Fa2 durch Umströmung mit Wasser erzeugt.

Das Wasserfahrzeug 10 weist die Längsachse 200, eine Querachse 202 und eine Hochachse 204 auf. Die räumliche Angabe vorne und hinten bezieht sich dabei auf eine Position in Bezug auf die Längsachse 200, links und rechts auf eine Position in Bezug auf die Querachse 202 und oben und unten auf eine Position in Bezug auf die Hochachse 204. Der Neigungswinkel beschreibt einen Winkel in der durch die Längsachse 200 und die Hochachse 204 aufgespannten Ebene, der Kippwinkel einen Winkel in der durch die Querachse 202 und die Hochachse 204 aufgespannten Ebene und der Drehwinkel einen Winkel in der durch die Längsachse 200 und die Querachse 202 aufgespannten Ebene.

Die erste Tragflächenvorrichtung 14 ist in einer vorderen Hälfte des Wasserfahrzeugs 10 angeordnet. Die zweite Tragflächenvorrichtung 18 ist in einer hinteren Hälfte des Wasserfahrzeugs 10 angeordnet. Die erste Tragflächenvorrichtung 14 weist eine erste Tragfläche 24 auf. Die zweite Tragflächenvorrichtung 18 weist eine zweite Tragfläche 26 und eine dritte Tragfläche 28 auf. Die zweite und dritte Tragfläche 26, 28 bilden bevorzugt einen Boxwing, also eine geschlossene Tragfläche. Die zweite und dritte Tragfläche 26, 28 sind in Bezug auf die Hochachse 204 übereinander angeordnet, in Bezug auf die Querachse 202 an beiden Tragflächenenden über jeweilige Tragflächenverbindungselemente 30, insbesondere winglets oder end plates, miteinander verbunden und in Bezug auf die Längsachse 200 bündig zueinander ausgerichtet. Die zweite Tragfläche 26 ist in Bezug auf die Hochachse 204 oberhalb von der dritten Tragfläche 28 angeordnet. Die Spannweite S2 der zweiten Tragfläche 26 ist gleich der Spannweite S3 der dritten Tragfläche 28. Die Spannweite S1 der ersten Tragfläche 24 ist bevorzugt kleiner als die Spannweite S2, S3 der zweiten und dritten Tragfläche 26, 28. Die erste Tragfläche 24 ist in Bezug auf die Hochachse 204 zwischen der zweiten und dritten Tragfläche 26, 28 angeordnet. Die erste, zweite und dritte Tragfläche 24, 26, 28 kann jeweils ein strömungsdynamisches Profil, insbesondere ein Tragflächenprofil, beispielsweise ein NACA-Profil, aufweisen.

Die erste und zweite Auftriebskraft Fa1, Fa2 kann hauptsächlich durch die Umströmung der jeweiligen Tragfläche 24, 26, 28 im und mit Wasser bewirkt werden. Die jeweilige Tragfläche 24, 26, 28 ist dabei als hydrofoil ausgebildet. Die erste Tragfläche 24 weist an beiden Tragflächenenden jeweils ein Tragflächenabschlusselement 32, insbesondere ein winglet, auf insbesondere zur Verringerung des, bevorzugt induzierten, Strömungswiderstands.

Die erste Tragfläche 24 ist an einem in Bezug auf die Querachse 202 in einem Zentralbereich des Wasserfahrzeugs 10 liegenden ersten Halteelement 34, beispielsweise einem Mast oder einer Strebe, befestigt. Die zweite und dritte Tragfläche 26, 28 sind an einem in Bezug auf die Querachse 202 in einem Zentralbereich des Wasserfahrzeugs 10 liegenden zweiten Halteelement 36, beispielsweise einem Mast oder einer Strebe, befestigt und gemeinsam an dem zweiten Halteelement 36 festgelegt sowie darüber mit dem Wasserfahrzeug 10 verbunden. Die erste, zweite und dritte Tragfläche 24, 26, 28 erstreckt sich jeweils in Bezug auf die Querachse 202 ausgehend von dem jeweiligen ersten oder zweiten Haltelement 34, 36 in beide Richtungen. Das jeweilige erste und zweite Haltelement 34, 36 verläuft parallel zu der Hochachse 204 und senkrecht zu der Querachse 202. Das jeweilige erste und zweite Halteelement 34, 36 ist mit dem Schwimmkörperelement 12 unmittelbar verbunden. Das zweite Haltelement 36 weist wenigstens eine Aussparung auf, in der die elektrische Versorgung, beispielsweise wenigstens ein Kabel, eines Antriebselements 38 durchgeführt ist.

Das Antriebselement 38 kann eine Vorschubkraft Fv auf das Wasserfahrzeug 10 bewirken. Das Antriebselement 38 ist der zweiten Tragflächenvorrichtung 18 zugeordnet und entlang der Hochachse 204 unterhalb der zweiten Tragfläche 26 und oberhalb der dritten Tragfläche 28 angeordnet. Das Antriebselement 38 weist ein Vorschubelement 40, beispielsweise einen Propeller, auf. Das Vorschubelement 40 ist von einem Schutzgehäuse 42 umgeben, insbesondere um einen Schutz vor einer versehentlichen Berührung des Vorschubelements 40 zu ermöglichen. Das Schutzgehäuse 42 ist an dem zweiten Halteelement 36 befestigt und zwischen der zweiten und dritten Tragfläche 26, 28 angeordnet. Das Antriebselement 38 umfasst einen Elektromotor, der das Vorschubelement 40 mittelbar, beispielsweise über ein Getriebe oder unmittelbar antreibt. Der Elektromotor ist in einem Antriebsgehäuse 44 vor dem Vorschubelement 40 angeordnet. Das Antriebselement 38 wird über ein Batterieelement 45 mit elektrischer Energie versorgt, das bevorzugt in dem Schwimmkörperelement 12 angeordnet ist.

Das Wasserfahrzeug 10 weist eine Lenkvorrichtung 46 auf, die wiederum die erste Tragflächenvorrichtung 14 aufweist, die drehbar ist und eine Drehbewegung 47 ausführen kann und die eine Richtungsänderung des Wasserfahrzeugs 10, insbesondere eine Drehung des Wasserfahrzeugs 10 um die Hochachse 204, abhängig von einer Drehbewegung 48 eines durch die Person bedienbaren Lenkelements 49, insbesondere umfassend eine Griffstange 50, bewirken kann.

In Figur 2 ist eine Seitenansicht eines Wasserfahrzeugs 10 in einer weiteren speziellen Ausführungsform der Erfindung dargestellt. Die erste Tragflächenvorrichtung 14 kann die erste Auftriebskraft Fa1 erzeugen, die bei Geschwindigkeiten größer gleich einer ersten Abhebegeschwindigkeit eine erste Hubhöhe h1 des Wasserfahrzeugs 10 über der Wasseroberfläche 52 bewirken kann. Die zweite Tragflächenvorrichtung 18 kann die zweite Auftriebskraft Fa2 erzeugen, die bei Geschwindigkeiten größer gleich einer zweiten Abhebegeschwindigkeit eine gegenüber der ersten Hubhöhe h1 entlang der Längsachse 200 beabstandete zweite Hubhöhe h2 des Wasserfahrzeugs 10 über der Wasseroberfläche 52 bewirken kann. Die erste und zweite Hubhöhe h1, h2 ist jeweils der Höhenversatz des Wasserfahrzeugs 10 entlang der Hochachse 204 ausgehend von der Referenzhöhe 54 des Wasserfahrzeugs 10 auf der Wasseroberfläche bei einer Geschwindigkeit von Null. Die erste Hubhöhe h1 kann eine Höhe des Frontbereichs 56 des Wasserfahrzeugs über der Wasseroberfläche 52 sein. Die zweite Hubhöhe h2 kann eine Höhe des Heckbereichs 58 des Wasserfahrzeugs über der Wasseroberfläche 52 sein.

Das Wasserfahrzeug kann in Bezug auf eine horizontale Ausrichtung einen durch die erste und zweite Hubhöhe h1, h2 festgelegten Neigungswinkel v einnehmen. Das Wasserfahrzeug 10 weist eine Verstellvorrichtung 20, die an der ersten Tragflächenvorrichtung 14 angeordnet ist und eingerichtet ist, die erste Hubhöhe h1 abhängig von einer Stellgrösse zu verändern und eine Steuervorrichtung 22 zur Ausgabe der Stellgrösse an die Verstellvorrichtung 20 auf. Die Verstellvorrichtung 20 umfasst eine schwenkbare Tragflächenklappe (flap) zur Änderung des Auftriebsbeiwerts der ersten Tragfläche 24.

Die Steuervorrichtung 22 ist eingerichtet, den Neigungswinkel v zu erfassen und die Stellgrösse bei einer Geschwindigkeit kleiner als der zweiten Abhebegeschwindigkeit abhängig von dem Neigungswinkel v und bei einer Geschwindigkeit größer gleich der zweiten Abhebegeschwindigkeit unabhängig von dem Neigungswinkel v auszugeben. Dadurch kann ein übermäßiger Neigungswinkel des Wasserfahrzeugs bei Geschwindigkeiten kleiner als der zweiten Abhebegeschwindigkeit verhindert werden. Das Wasserfahrzeug kann einen Abhebezustand über der Wasseroberfläche 52 energiesparender einnehmen. Der Startvorgang des Wasserfahrzeugs kann auch bei Veränderungen der Lage und des Betrags des Körperschwerpunkts 208 der Person 82 sicher, zuverlässig und energiesparend erfolgen.

Die erste Abhebegeschwindigkeit ist größer als die zweite Abhebegeschwindigkeit. Nach dem Startvorgang im Abhebezustand bei Geschwindigkeiten größer gleich der zweiten Abhebegeschwindigkeit kann sich der Neigungswinkel v durch die Anordnung der Verstellvorrichtung 20 an der ersten Tragflächenvorrichtung 14 selbsteinstellend verändern. Eine zusätzliche Verstellvorrichtung an der zweiten Tragflächenvorrichtung 18 kann entfallen. Das Wasserfahrzeug kann bei zunehmenden Geschwindigkeiten oberhalb der ersten und zweiten Abhebegeschwindigkeit eine Drehbewegung um eine parallel zu der Querachse 202 verlaufende Neigungsachse 210 ausführen. Die Drehbewegung um die Neigungsachse 210 ist von der ersten und zweiten Auftriebskraft abhängig und die zweite Hubhöhe h2 kann durch die Drehbewegung um die Neigungsachse 210 durch die damit erfolgende Verringerung des Anstellwinkels der zweiten Tragflächenvorrichtung 18 begrenzt werden. Die zweite Hubhöhe h2 kann bei einer Geschwindigkeit größer als der zweiten Abhebegeschwindigkeit durch Verlagerung des Körperschwerpunkts 208 der Person 82 entlang der Längsachse 200 veränderbar sein.

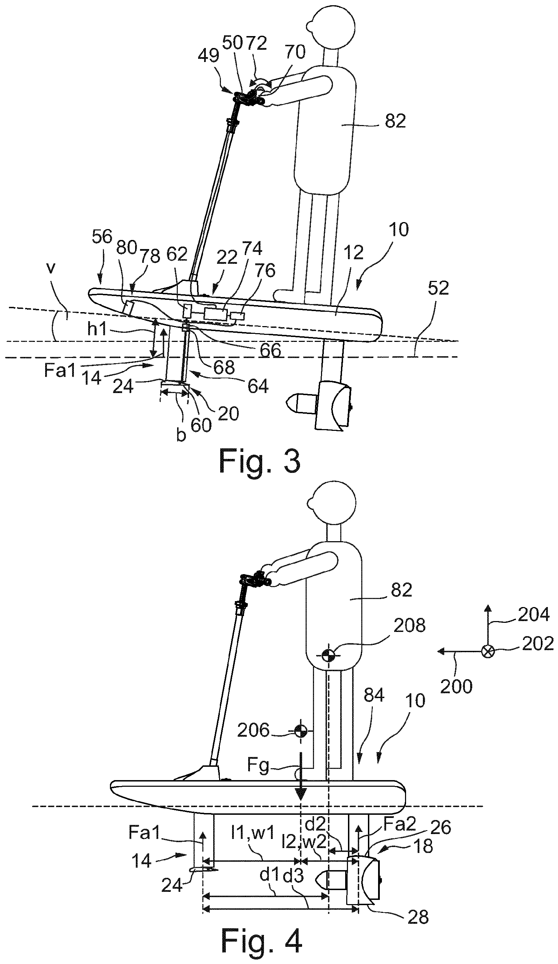

Figur 3 zeigt eine Seitenansicht eines Wasserfahrzeugs 10 in einer weiteren speziellen Ausführungsform der Erfindung. Die Steuervorrichtung 22 ist eingerichtet, die Stellgrösse abhängig von der erfassten ersten Hubhöhe h1 und dem erfassten Neigungswinkel v festzulegen. Durch die zusätzliche Einbeziehung der ersten Hubhöhe h1 kann der Startvorgang des Wasserfahrzeug noch effizienter erfolgen, beispielsweise indem der Frontbereich 56 des Wasserfahrzeugs zumindest teilweise oberhalb der Wasseroberfläche 52 angehoben wird und dadurch die Umströmung des Wasserfahrzeugs verbessert wird.

Die Steuervorrichtung 22 ist eingerichtet, bei Geschwindigkeiten größer gleich der zweiten Abhebegeschwindigkeit die Stellgrösse größer gleich einem Minimalwert festzulegen, wobei der Minimalwert einer ersten Hubhöhe h1 entspricht, deren Betrag grösser gleich einer Profiltiefe b der ersten Tragfläche 24 ist.

Die Verstellvorrichtung 20 weist ein Verstellelement 60 zur Veränderung der ersten Auftriebskraft Fa1 und ein in dem Schwimmkörperelement 12 angeordnetes Aktorelement 62 zur Betätigung des Verstellelements 60 abhängig von der Stellgrösse auf. Das Verstellelement 60 kann wenigstens eine schwenkbare Tragflächenklappe zur Änderung des Auftriebsbeiwerts der ersten Tragfläche 24 umfassen. Das Aktorelement 62 kann einen Stellmotor oder Schrittmotor umfassen.

Die Verstellvorrichtung 20 umfasst weiterhin eine Übertragungsvorrichtung 64 zur Übertragung einer von dem Aktorelement 62 ausgegebenen Aktorbewegung zu dem Verstellelement 60. Die Aktorbewegung hängt von der Stellgrösse ab und ist eine Drehbewegung. Die Verstellbewegung ist eine translatorische Bewegung. Die Übertragungsvorrichtung 64 weist ein erstes Übertragungselement 66 und ein zweites Übertragungselement 68 auf. Das zweite Übertragungselement 68 ist mit dem ersten Übertragungselement 66 drehfest und lösbar verbunden. Das erste Übertragungselement 66 ist in dem Schwimmkörperelement 12 angeordnet und das zweite Übertragungselement 68 ist in der ersten Tragflächenvorrichtung 14 angeordnet. Die Verstellvorrichtung 20 ist gemeinsam mit der ersten Tragflächenvorrichtung 14 lösbar mit dem Wasserfahrzeug verbunden. Durch die lösbare Verbindung zwischen dem ersten und zweiten Übertragungselement 66, 68 kann die erste Tragflächenvorrichtung 14 einfach und schnell abgenommen und angebaut werden.

Die Steuervorrichtung 22 weist ein Bedienelement 70 auf, das manuell durch die Person 82 des Wasserfahrzeugs, insbesondere während der Fahrt, bedienbar ist und abhängig von der Bedienung durch die Person 82 eine veränderbare Stellposition 72 aufweisen kann, wobei die Stellgrösse abhängig von der Stellposition 72 ist. Das Bedienelement 70 ist hier als Drehschalter ausgeführt und an dem Lenkelement 49, insbesondere an der Griffstange 50, angebracht. Das Bedienelement 70 ist derart ausgeführt, dass die Veränderung der Stellposition 72 durch eine Bewegung relativ zu der Griffstange 50 erfolgen kann. Die Stellposition 72 ist eine Drehstellung des Drehschalters. Die Stellposition 72 kann selbsttätig in einer eingestellten Stellposition 72 bleiben. Beispielsweise kann das Bedienelement 70 hierfür mehrere Rastpositionen aufweisen. Auch kann die Stellposition durch ein Rückstellelement, beispielsweise eine Rückstellfeder, in eine Neutralstellung überführt werden, insbesondere wenn keine äußere Kraft auf das Bedienelement 70 einwirkt.

Die Steuervorrichtung 22 weist ein Steuerungsmodul 74 auf, das die Stellposition 72 erfasst und davon abhängig die Stellgrösse ändern kann. Bevorzugt ist die Stellgrösse bei Geschwindigkeiten kleiner als der zweiten Abhebegeschwindigkeit unabhängig von der Stellposition 72, um eine nachteilige Beeinflussung des Startvorgangs zu vermeiden. Dadurch kann der Neigungswinkel v bei Geschwindigkeiten kleiner als der zweiten Abhebegeschwindigkeit unabhängig von der Stellposition 72 eingestellt und/oder begrenzt werden.

Dem Steuerungsmodul 74 ist eine Regeleinheit 76 zugeordnet, die die Stellgrösse abhängig von einem Messwert und einem Sollwert an die Verstellvorrichtung 20 ausgibt. Der Sollwert ist abhängig von der Stellposition 72. Die Steuervorrichtung 22 kann einen Stabilisierungsbetrieb einnehmen, bei dem die Steuervorrichtung 22 die Stellgrösse abhängig von dem Sollwert unter Einhaltung einer möglichst konstanten ersten Hubhöhe h1 an die Verstellvorrichtung 20 ausgibt. Der Sollwert kann der Regeleinheit 76 zusätzlich oder alternativ zu der Stellposition 72 automatisch vorgegeben werden.

Eine an dem Wasserfahrzeug 10 angeordnete Höhenerfassungseinheit 78 ermöglicht eine Erfassung der ersten Hubhöhe h1. Die Stellgrösse kann abhängig von der erfassten ersten Hubhöhe h1 sein. Die Höhenerfassungseinheit 78 weist wenigstens einen Abstandssensor 80 auf, der die erste Hubhöhe h1 optisch, kapazitiv, induktiv, elektrisch, elektromagnetisch und/oder akustisch erfassen kann. Beispielsweise kann der Abstandssensor 80 ein Ultraschallsensor, ein Radar oder ein Lidar sein. Der Abstandssensor 80 ist in dem Frontbereich 56 an einer Unterseite des Wasserfahrzeugs bündig eingebaut. Der Messwert entspricht dabei der von der Höhenerfassungseinheit 78 erfassten ersten Hubhöhe h1 und wird der Regeleinheit 76 übermittelt.

In Figur 4 ist eine Seitenansicht eines Wasserfahrzeugs 10 in einer weiteren speziellen Ausführungsform der Erfindung dargestellt. Das Wasserfahrzeug 10 weist zusammen mit dem Körpergewicht der wenigstens einen Person 82, die sich auf einem Aufnahmebereich 84 an dem Wasserfahrzeug 10 befindet, insbesondere die das Wasserfahrzeug 10 bedient, eine Gesamtgewichtskraft Fg auf, die an einem gedachten Gesamtschwerpunkt 206 angreift.

Die insbesondere aufrecht auf dem Wasserfahrzeug 10 stehende Person 82 weist einen Körperschwerpunkt 208 auf. Der Körperschwerpunkt 208 der Person 82 kann durch Verlagerung, insbesondere bei Bewegung der Person, eine veränderliche Position entlang der Längsachse 200 einnehmen und in Bezug auf die Längsachse 200 zwischen der ersten und zweiten Tragflächenvorrichtung 14, 18 liegen. Der Körperschwerpunkt 208 und die erste Tragfläche 24 sind entlang der Längsachse 200 über einen ersten Abstand d1 und der Körperschwerpunkt 208 und die zweite Tragfläche 26 sind entlang der Längsachse 200 über einen zweiten Abstand d2 voneinander beabstandet. Die erste Tragfläche 24 und die zweite Tragfläche 26 sind entlang der Längsachse 200 über einen dritten Abstand d3 voneinander beabstandet. Der erste Abstand d1 und der zweite Abstand d2 ist jeweils kleiner als der dritte Abstand d3. Der erste Abstand d1 ist größer als der zweite Abstand d2. Dadurch kann die Handlichkeit des Wasserfahrzeugs verbessert werden.

Die erste Abhebegeschwindigkeit ist die Geschwindigkeit des Wasserfahrzeugs, ab der die durch die erste Tragflächenvorrichtung 14 bewirkte erste Auftriebskraft Fa1 grösser gleich dem auf die erste Tragflächenvorrichtung 14 einwirkenden Anteil der Gesamtgewichtskraft Fg ist. Die zweite Abhebegeschwindigkeit ist die Geschwindigkeit des Wasserfahrzeugs, ab der die durch die zweite Tragflächenvorrichtung 18 bewirkte zweite Auftriebskraft Fa2 grösser gleich dem auf die zweite Tragflächenvorrichtung 18 einwirkenden Anteil, insbesondere dem verbleibenden Anteil, der Gesamtgewichtskraft Fg ist. Zwischen der Gesamtgewichtskraft Fg und der ersten Auftriebskraft Fa1 ist in Bezug auf die Längsachse 200 ein erster Abstand I1 vorhanden. Zwischen der Gesamtgewichtskraft Fg und der zweiten Auftriebskraft Fa2 ist in Bezug auf die Längsachse 200 ein zweiter Abstand I2 vorhanden. Der erste Abstand I1 ist größer als der zweite Abstand I1.

Der Gesamtschwerpunkt 206 weist in Bezug auf die Längsachse 200 zu der ersten Auftriebskraft Fa1 einen ersten Abstand w1 und zu der zweiten Auftriebskraft Fa2 einen zweiten Abstand w2 auf, wobei der erste Abstand w1 größer als der zweite Abstand w2 ist. Der zweite Abstand w2 ist bevorzugt kleiner als 75% des ersten Abstands w1.

Der auf die erste Tragflächenvorrichtung 14 einwirkende Anteil der Gesamtgewichtskraft Fg kann kleiner als 50%, 40%, 30% oder 20% sein. Der auf die zweite Tragflächenvorrichtung 18 einwirkende Anteil der Gesamtgewichtskraft Fg kann größer gleich 20%, 30%, 40% oder 50% sein. Die zweite Auftriebskraft Fa2 kann grösser als die erste Auftriebskraft Fa1 sein.

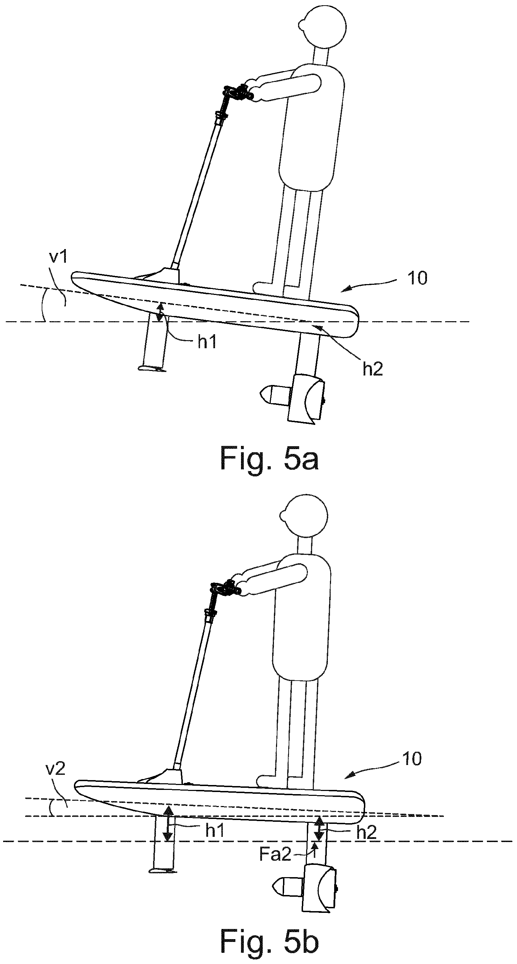

Figur 5a zeigt eine Seitenansicht eines Wasserfahrzeugs 10 in einer weiteren speziellen Ausführungsform der Erfindung in einem ersten Betriebszustand, bei dem das Wasserfahrzeug eine Geschwindigkeit gleich der zweiten Abhebegeschwindigkeit aufweist. Das Wasserfahrzeug weist dabei einen ersten Neigungswinkel v1 auf. Die erste Hubhöhe h1 ist bei der zweiten Abhebegeschwindigkeit größer als Null und die zweite Hubhöhe ist Null.

Figur 5b zeigt eine Seitenansicht eines Wasserfahrzeugs 10 in einer weiteren speziellen Ausführungsform der Erfindung in einem zweiten Betriebszustand, bei dem das Wasserfahrzeug eine Geschwindigkeit größer als die zweite Abhebegeschwindigkeit aufweist. Das Wasserfahrzeug weist dabei einen zweiten Neigungswinkel v2 auf, der kleiner als der erste Neigungswinkel ist. Die erste Hubhöhe h1 ist größer als die zweite Hubhöhe h2. Durch den gegenüber dem ersten Neigungswinkel kleineren zweiten Neigungswinkel v2 bei höheren Geschwindigkeiten kann die mit zunehmender Geschwindigkeit ansteigende zweite Auftriebskraft Fa2 durch Abnahme des Neigungswinkels und damit des Anstellwinkels der zweiten Tragflächenvorrichtung 18 begrenzt werden.

### Bezugszeichenliste

- 10: Wasserfahrzeug
- 12: Schwimmkörperelement
- 14: erste Tragflächenvorrichtung
- 18: zweite Tragflächenvorrichtung
- 20: Verstellvorrichtung
- 22: Steuervorrichtung
- 24: erste Tragfläche
- 26: zweite Tragfläche
- 28: dritte Tragfläche
- 30: Tragflächenverbindungselement
- 32: Tragflächenabschlusselement
- 34: erstes Halteelement
- 36: zweites Halteelement
- 38: Antriebselement
- 40: Vorschubelement
- 42: Schutzgehäuse
- 44: Antriebsgehäuse
- 45: Batterieelement
- 46: Lenkvorrichtung
- 47: Drehbewegung
- 48: Drehbewegung
- 49: Lenkelement
- 50: Griffstange
- 52: Wasseroberfläche
- 54: Referenzhöhe
- 56: Frontbereich
- 58: Heckbereich
- 60: Verstellelement
- 62: Aktorelement
- 64: Übertragungsvorrichtung
- 66: erstes Übertragungselement
- 68: zweites Übertragungselement
- 70: Bedienelement
- 72: Stellposition
- 74: Steuerungsmodul
- 76: Regeleinheit
- 78: Höhenerfassungseinheit
- 80: Abstandssensor
- 82: Person
- 84: Aufnahmebereich

- 200: Längsachse
- 202: Querachse
- 204: Hochachse
- 206: Gesamtschwerpunkt
- 208: Körperschwerpunkt
- 210: Neigungsachse

- S1: Spannweite der ersten Tragfläche
- S2: Spannweite der zweiten Tragfläche
- S3: Spannweite der dritten Tragfläche
- Fa1: erste Auftriebskraft
- Fa2: zweite Auftriebskraft
- Fv: Vorschubkraft
- Fg: Gesamtgewichtskraft
- b: Profiltiefe
- d1: erster Abstand
- d2: zweiter Abstand
- d3: dritter Abstand
- h1: erste Hubhöhe
- h2: zweite Hubhöhe
- l1: erster Abstand
- l2: zweiter Abstand
- w1: erster Abstand
- w2: zweiter Abstand

## Patentansprüche

1. Wasserfahrzeug zur Beförderung wenigstens einer Person auf oder über einer Wasseroberfläche, aufweisend
ein Schwimmkörperelement zur Bewirkung einer statischen Auftriebskraft, mit einem Aufnahmebereich für die Person,
eine erste Tragflächenvorrichtung, die eine erste Auftriebskraft durch Umströmung mit Wasser erzeugt,
eine zweite Tragflächenvorrichtung, die entlang einer Längsachse beabstandet zu der ersten Tragflächenvorrichtung angeordnet ist und die eine zweite Auftriebskraft durch Umströmung mit Wasser erzeugt, wobei
die erste Auftriebskraft eine erste Hubhöhe des Wasserfahrzeugs über der Wasseroberfläche bewirken kann,
eine Verstellvorrichtung, die an der ersten Tragflächenvorrichtung angeordnet ist und eingerichtet ist, die erste Hubhöhe abhängig von einer Stellgrösse zu verändern, wobei das Wasserfahrzeug in Bezug auf eine horizontale Ausrichtung einen Neigungswinkel einnehmen kann,
**dadurch gekennzeichnet, dass**
die zweite Auftriebskraft bei Geschwindigkeiten größer gleich einer zweiten Abhebegeschwindigkeit eine gegenüber der ersten Hubhöhe entlang der Längsachse beabstandete zweite Hubhöhe des Wasserfahrzeugs über der Wasseroberfläche bewirkt und eine Steuervorrichtung zur Ausgabe der Stellgrösse an die Verstellvorrichtung angeordnet und eingerichtet ist, den Neigungswinkel zu erfassen und die Stellgrösse bei zumindest einer Geschwindigkeit kleiner als die zweite Abhebegeschwindigkeit abhängig von dem Neigungswinkel auszugeben.

2. Wasserfahrzeug nach Anspruch 1, **dadurch gekennzeichnet, dass** die Steuervorrichtung eingerichtet ist, die Stellgrösse bei zumindest einer Geschwindigkeit größer gleich der zweiten Abhebegeschwindigkeit unabhängig von dem Neigungswinkel auszugeben.

3. Wasserfahrzeug nach Anspruch 1 oder 2, **dadurch gekennzeichnet, dass** die Steuervorrichtung eingerichtet ist, die Stellgrösse abhängig von einer erfassten ersten Hubhöhe und dem erfassten Neigungswinkel festzulegen.

4. Wasserfahrzeug nach einem der vorangehenden Ansprüche, **dadurch gekennzeichnet, dass** die Verstellvorrichtung ein Verstellelement zur Veränderung der ersten Auftriebskraft und ein Aktorelement zur Betätigung des Verstellelements abhängig von der Stellgrösse aufweist.

5. Wasserfahrzeug nach einem der vorangehenden Ansprüche, **dadurch gekennzeichnet, dass** die Steuervorrichtung ein Bedienelement umfasst, das manuell durch die Person des Wasserfahrzeugs, insbesondere während der Fahrt, bedienbar ist und abhängig von der Bedienung durch die Person eine veränderbare Stellposition aufweisen kann, wobei die Stellgrösse abhängig von der Stellposition ist.

6. Wasserfahrzeug nach Anspruch 5, **dadurch gekennzeichnet, dass** die Stellgrösse bei Geschwindigkeiten kleiner als der zweiten Abhebegeschwindigkeit unabhängig von der Stellposition ist.

7. Wasserfahrzeug nach einem der vorangehenden Ansprüche, **dadurch gekennzeichnet, dass** die Steuervorrichtung eine Regeleinheit umfasst, die die Stellgrösse abhängig von einem Messwert und einem Sollwert an die Verstellvorrichtung ausgibt.

8. Wasserfahrzeug nach Anspruch 5 oder 6 und Anspruch 7, **dadurch gekennzeichnet, dass** der Sollwert abhängig von der Stellposition des Bedienelements ist.

9. Wasserfahrzeug nach einem Ansprüche 5 bis 8, **dadurch gekennzeichnet, dass** das Bedienelement an einer Lenkstange einer Lenkvorrichtung angeordnet ist.

10. Wasserfahrzeug nach einem der vorangehenden Ansprüche, **dadurch gekennzeichnet, dass** die Stellgrösse ein elektrisches und/oder optisches Signal ist.
